# EUROPEAN PATENT APPLICATION

(11) **EP 4 811 208 A1**
(43) Date of publication of application: **23.09.2026**
(21) Application number: 25165429.9
(22) Date of filing: 21.03.2025
(51) Int. Cl.: G06F 40/295, G06F 40/35

(54) **METHODS AND SYSTEMS FOR IDENTIFYING RELATIONSHIPS BETWEEN ENTITIES**

(71) Applicant: British Telecommunications Public Limited Company, London E1 8EE (GB)
(72) Inventor: The designation of the inventor has not yet been filed
(74) Representative: British Telecommunications public limited company Intellectual Property Department

(57) **Abstract**

A computer-implemented method of identifying one or more pairs of related entities in a source text, the method comprising: obtaining a set of one or more occurrences of a first entity in the source text and identifying a set of candidate entity pairings. Identifying the set of candidate entity pairings comprises: for each occurrence of the first entity in the set, identifying in the source text one or more occurrences of a further entity, which is different to the first entity, which are nearest to the respective occurrence of the first entity in the source text; and identifying a candidate entity pairing as comprising the respective occurrence of the first entity and one of the identified one or more occurrences of a further entity. The method further comprises, for each candidate entity pairing: determining a distance in the source text between the respective occurrence of the first entity and the respective occurrence of the further entity so that each candidate entity pairing has an associated distance value; carrying out a first filtering stage, wherein the first filtering stage comprises filtering the set of candidate entity pairings based on the associated distance values for the respective candidate entity pairings to obtain a shortlist of candidate entity pairings; and carrying out a second filtering stage, wherein the second filtering stage comprises filtering the shortlist of candidate entity pairings based on one or more semantic characteristics and/or one or more structural characteristics associated with at least a portion of the source text to obtain a final list of one or more pairs of related entities.

## Description

### TECHNICAL FIELD

The present disclosure relates to technology for identifying pairs of related entities mentioned in a text and optionally building a knowledge graph based on the identified related entities. More specifically, aspects relate to a computer-implemented method of identifying one or more pairs of related entities in a source text, a computer system including a processor and memory storing computer program code for performing the steps of the method, and a computer program comprising instructions which, when the program is executed by a computer, cause the computer to carry out the method.

### BACKGROUND

Automated, computer-implemented extraction of information from unstructured text finds application in many fields, including cybersecurity, medicine and finance. Computer-implemented information extraction can replace a manual process in which a human reads the text. In the field of cybersecurity, for example, security analysts typically keep updated of cyber threat attacks by reading threat intelligence reports which comprise unstructured text. However, reading such threat reports takes a significant amount of time - an analyst can typically need to read a few thousand reports per month. It is therefore useful to be able to automatically extract information from text instead.

Two key challenges exist in automated extraction of information from unstructured text: identifying entities in the text (an entity being, for example, an object, event, situation, concept, person, place, company or group) and identifying relationships between those entities that are described in the text. Identifying relationships between entities is particularly challenging because it cannot be assumed that two entities are related to each other simply because those two entities are mentioned together in a given text.

Current methods and systems for identifying relationships between entities can be inaccurate, slow and computationally expensive. It would be advantageous to have an improved method of identifying relationships which is accurate, fast and computationally efficient.

### SUMMARY

According to a first aspect there is provided a computer-implemented method of identifying one or more pairs of related entities in a source text. The method comprises: obtaining a set of one or more occurrences of a first entity in the source text; identifying a set of candidate entity pairings, wherein identifying the set of candidate entity pairings comprises: for each occurrence of the first entity in the set, identifying in the source text one or more occurrences of a further entity, which is different to the first entity, which are nearest to the respective occurrence of the first entity in the source text; and identifying a candidate entity pairing as comprising the respective occurrence of the first entity and one of the identified one or more occurrences of a further entity. The method further comprises: for each candidate entity pairing, determining a distance in the source text between the respective occurrence of the first entity and the respective occurrence of the further entity so that each candidate entity pairing has an associated distance value. The method further comprises carrying out a first filtering stage, wherein the first filtering stage comprises filtering the set of candidate entity pairings based on the associated distance values to obtain a shortlist of candidate entity pairings. The method further comprises carrying out a second filtering stage, wherein the second filtering stage comprises filtering the shortlist of candidate entity pairings based on one or more semantic characteristics and/or one or more structural characteristics associated with at least a portion of the source text to obtain a final list of one or more pairs of related entities.

Such a method has various advantages which will now be explained.

Firstly, by carrying out a first stage of filtering based on the position of the occurrences within the source text and only processing further (as part of the second filtering stage) a subset of the full list of candidate entity pairings, rather than the whole list of candidate entity pairings, the method is made more computationally efficient.

Secondly, by filtering based on a combination of position (in the first filtering stage) and semantics and/or the structure of the source text (in the second filtering stage), the method is made more robust compared to a method which makes use of only one aspect of a text, for example semantics, only. Use of semantics only, for example, to identify relationships between entities is typically liable to one or more of: spelling errors, variation in spellings of entities and the use of different punctuation. By analysing other aspects of the text in addition to or as an alternative to semantics, for example the position of those entities in the source text, this effect is mitigated. More generally, analysing a number of different aspects of the text (both position and one or both of semantic and structural aspects of the text) also makes the method more robust in that the effect of an issue or mistake with one of those areas is reduced as compared to a method than focusses of one aspect of the text only.

The use of a combination of position with one or both of structure and semantics to identify relationships between entities is particularly advantageous for certain types of text, for example:
- text in which multiple entities are mentioned in a list but are not related, and/or
- text in which semantically negative sentences are used (for example '... *entity1 is likely not entity2 but a different entity...').*

One area in which such texts arise often is cybersecurity. Cybersecurity threat reports often contain semantically negative sentences and lists of unrelated entities. For example, some threat reports contain a list of all the entities to which that threat report relates and so although those entities are present in the text alongside each other, this is not because there is some real-world relationship between those entities. Example types (otherwise referred to as classes) of entities in the field of cybersecurity are threat actors (e.g. groups, individuals or even nations who carry out cyberattacks
- otherwise referred to as an 'actor'), malware (e.g. types of malware or specific malwares), and cyberattack techniques. Cyberattack techniques refer to the methods or actions that threat actors use to achieve their goals. These techniques are part of a structured framework for executing cyberattacks. Some examples of cyberattack techniques are:
- phishing: sending deceptive emails to trick recipients into revealing sensitive information or downloading malware;
- exploiting vulnerabilities: taking advantage of weaknesses in software or systems to gain unauthorized access;
- credential dumping: extracting account credentials from a compromised system to use for further attacks;
- command and control (C2): establishing a communication channel between the attacker and the compromised system to control it remotely; and
- lateral movement: moving through a network to access additional systems and data after an initial compromise.

In addition, the methods disclosed herein are able to identify relationships between entities particularly accurately. This increased accuracy has at least the following advantages:
- reduced hardware requirements: only those entities that are truly related are identified by the method and so only data relating to those entities need be output and stored (for example in a knowledge graph, as will be explained below);
- better cyber-threat response: the more accurate the relationships identified by the method are, the more accurate the information provided to a user (e.g. a security analyst) or software module is - this has the effect of enabling a better (faster, more focussed, more successful) response to a cyberattack or threat.

Generally, the computational resources (and/or processing time) required to implement the computer-implemented methods described herein scale linearly with the number of source texts analysed and the number of occurrences within those source texts. This is advantageous compared to other methods of identifying relationships in source texts, such as those involving the use of large language models which typically involve multiplication of large matrices. In those methods, the computational resources (or processing time, for a fixed computational resource) scale exponentially with the increase of the amount of text to be analysed.

Also, the methods described herein can be performed using central processing units (CPUs) rather than graphical processing units (GPUs) as relatively little computing power is needed (as compared to e.g. large artificial intelligence, Al, models, which generally require GPUs). Accordingly, few resources are needed: CPUs are cheap (compared to CPUs), readily available and also dissipate less heat than GPUs, therefore requiring less cooling (if any).

Reference herein to two or more entities being related to each other is intended to refer to those entities having a real-world relationship or connection. Put differently, the relationships being identified are relationships beyond the presence of both entities in the source text. Possible relationships include but are not limited to:
- a first entity (e.g. a threat actor) using a second entity (e.g. a particular malware)
- a first entity (e.g. a threat actor) working with or being co-located with another a second entity (e.g. another threat actor)
- a first entity (e.g. a threat actor) using a second entity (e.g. a particular cyberattack technique)
- a first entity transferring data, money or objects to a second entity (e.g. a group or company transferring data to an individual, a first organ in the human or animal body transferring enzymes to a second organ, or a first computer in a network transferring data to a second computer in the network).

A further example of a field in which relationships may be identified using the methods disclosed herein is the biomedical field. For example, relationships may be connections between organs, e.g. how organs are connected through enzymes involved in various biochemical processes. In this example, one class of entity is organs of the body, as follows:
- liver: produces bile, which contains bile salts;
- gallbladder: stores and concentrates bile from the liver;
- small intestine: receives bile to aid in the digestion of fats.

For example, the enzyme lipase is crucial. It is produced by the pancreas and acts in the small intestine to break down fats into fatty acids and glycerol. Example relationships to be identified by the methods disclosed herein from a source text are:
- liver connected to gallbladder through the production and storage of bile;
- gallbladder connected to small intestine through the release of bile;
- small intestine connected to pancreas through the action of lipase.

Reference herein to filtering of candidate entity pairings is intended to refer to discarding one or more of the candidate entity pairings and retaining the others, for example by adding them to a list (e.g. a shortlist or a final list). It should be noted that any reference to discarding a pairing or adding a pairing to a list may be achieved by adding or updating metadata associated with each pairing. For example a 'discard' flag or a 'shortlist' flag may be added to each pairing as appropriate to achieve the filtering.

The term 'semantic characteristics' is intended to refer to any characteristics or aspects relating to the meaning and interpretation of words, phrases, sentences, and texts. Analysing semantic characteristics may involve analysing context (i.e. how a relationship between two entities depends on the surrounding text or situation) and/or pragmatics (i.e. how context influences the interpretation of meaning).

The term 'structural characteristics' is intended to refer to any characteristics or aspects relating to the structure of the text. This may include the arrangement of the text, e.g. in sentences in paragraphs, and/or the presence of certain characters (e.g. punctuation, text separators) and/or the ordering of certain words (for example occurrences of entities) in the text.

Further, optional features of the method will now be described.

In some embodiments, the method comprises determining the one or more semantic characteristics and/or determining the one or more structural characteristics associated with at least a portion of the source text. Various examples of how this may be achieved are provided below.

In some embodiments, the first filtering stage comprises filtering the set of candidate entity pairings based on the associated distance values only. In other words, semantic characteristics and structural characteristics of the source text are not taken into account in the first filtering stage. This is a particularly fast, efficient way of filtering the candidate entity pairings.

As mentioned above, the method comprises obtaining a set of one or more occurrences of a first entity in the source text. The set may be obtained in any suitable way. The set (which may otherwise be referred to as a list) may be received or retrieved, for example from a memory.

In some embodiments, the method may comprise obtaining the set by identifying the one or more occurrences, for example by extracting the one or more occurrences of the first entity from the source text, for example by using named entity recognition (NER).

As mentioned above, the method comprises, for each occurrence of the first entity in the set, identifying in the source text one or more occurrences of a further entity, which is different to the first entity, which are nearest to the respective occurrence of the first entity in the source text. In other words, other occurrences in the source text which are close to the respective occurrence of the first entity (e.g. mentioned nearby in the source text) are identified. This may be achieved, for example, by analysing a list or data set indicating the positions in the source text of all occurrences of all entities mentioned in the source text. Alternatively, the one or more nearest occurrences may be identified by starting, in the source text, at the respective occurrence of the first entity and moving along the text until an occurrence of a further entity is reached. The movement along the text may be forwards (in the direction in which the source text would be read by a human) or backwards (in a direction opposite to the forwards direction). In some embodiments, the one or more occurrences of a further entity, which is different to the first entity, which are nearest to the respective occurrence of the first entity in the source text may comprise the occurrence of a further entity which is closest to the occurrence of the first entity moving along the text in a forwards direction and/or the occurrence of a further entity which is closest to the occurrence of the first entity moving along the text in a backwards direction. In other words, the one or more occurrences of a further entity which are nearest to the respective occurrence of the first entity in the source text may be the one or more occurrences of a further entity which are nearest to the respective occurrence of the first entity in the source text in a particular direction (e.g. forwards or backwards). In some embodiments, the closest A occurrences of a further entity in a forwards direction and/or the closest B occurrences of a further entity in a backwards direction may be selected, where A,B=3,4,5 etc. and A and B may have the same value or have different values.

It should be noted that the further entity may be the same or different for the various occurrences of the first entity. For example, each occurrence of the first entity may be paired up (to form a candidate entity pairing, as will be explained below) with respective occurrences of the same entity, e.g. a second entity, or respective occurrences of multiple different entities.

It should also be noted that a given occurrence of the first entity may appear in multiple candidate entity pairings. This may occur where two or more occurrences of a further entity, which is different to the first entity, which are nearest to the respective occurrence of the first entity in the source text are identified (e.g. the nearest occurrence of a further entity in the forwards direction and the nearest occurrence of a further entity in the backwards direction).

In any given candidate entity pairing, the two occurrences in the pairing may be within a single sentence or paragraph in the source text. Alternatively, the two occurrences in the pairing may be in different sentences or paragraphs in the source text.

The distance between two occurrences in the source text may be determined in any suitable way. For example, the distance between the two occurrences may be defined as the number of characters (including spaces or not) between the occurrences, e.g. between the first character of each occurrence. Alternatively, the distance may be defined in terms of a number of words, sentences or some other text separator between the two occurrences in the source text.

In some embodiments, the first filtering stage comprises applying a threshold to the distance value associated with each candidate entity pairing. The threshold may be predetermined or may be determined as part of the method. For example, applying the threshold may comprise discarding any candidate entity pairs with an associated distance value above the threshold. Alternatively, applying the threshold may comprise discarding a percentage of the pairings with the highest distance values (e.g. in a list of pairings which is ordered by distance in ascending order, discarding a bottom percentage, for example 80% or 90%, of pairings).

In some embodiments, the first filtering stage may comprise removing duplicates from the identified candidate entity pairings. For example, where the identified set of candidate pairings comprises multiple pairings, each comprising occurrences of the same two entities, duplicate pairings are removed and only a single candidate entity pairing comprising occurrences of any two entities is retained. The single candidate entity pairing which is retained may be the pairing which, out of all of the pairings comprising occurrences of those same two entities, has the shortest associated distance value. Removing duplicates may further improve the computational efficiency and/or speed of the method since fewer candidate entity pairings are processed in the second filtering stage.

In some embodiments, the second filtering stage comprises filtering the shortlist of candidate entity pairings based on a combination of (a) one or both of: one or more semantic characteristics and one or more structural characteristics associated with or of at least a portion of the source text and (b) the positions of the occurrences of the respective candidate entity pairing in the source text. In this way, information relating to the position of the occurrences of the entities in the candidate entity pairings in the shortlist is used in the second filtering stage along with semantic and/or structural characteristics. This has the effect of increasing the accuracy of the process of identifying relationships. The method is also made more robust since more information is taken into account in the second stage. For example, the effect of spelling errors or an unusual structure of a text (e.g. a bullet-point list) would be reduced as compared to a situation in which position is not taken into account in the second filtering stage.

In some embodiments, the second filtering stage comprises filtering the shortlist of candidate entity pairings based on a combination of (a) one or both of: one or more semantic characteristics and one or more structural characteristics associated with at least a portion of the source text and (b) the ordering of the occurrences in the source text. The inventors have recognised that the order in which entities are mentioned in the text can be indicative of a relationship (or not) between those entities.

Carrying out the second filtering stage based on the ordering of the occurrences in the source text may comprise determining a class of the entity which appears first in the source text and a class of the entity which appears second in the source text (out of the two entities in the respective candidate entity pairing) and carrying out the filtering based on that ordering. As mentioned above, the method comprises determining a distance in the source text between the respective occurrence of the first entity and the respective occurrence of the further entity (referred to as a 'distance value'). In some embodiments, determining a distance between the respective occurrence of the first entity and the respective occurrence of the further entity comprises determining both a value (i.e. a numerical value) indicating a displacement between the two occurrences and a distance direction, indicating the ordering of the occurrences in the source text. The displacement value may be, for example, the number of characters (including spaces or not) between the occurrences (e.g. between the first character of each occurrence). The distance direction may be designated by a positive or negative sign of the distance value. For example, the distance may have a displacement value indicative of the number of characters (for example) between the occurrences and a sign (indicative of whether the occurrence of the first entity appears in the source text before or after the occurrence of the further entity.) By analysing the distance direction as well as the distance value, additional information can be taken into account and relationships between entities identified more accurately. The distance value may be referred to as z, which may be an integer with a positive or negative sign (indicating the direction). The definition of z may depend on the class of the first entity and the class of the further entity. For example, the inventors have determined that in cases where the first entity is a threat actor, if the occurrence of a further entity of a different class (such as malware or technique) occurs before the occurrence of a threat actor in the source text, it is unlikely that the entities in that that particular pairing are truly related to each other. Conversely, if the malware/technique is mentioned in the source text after the threat actor, the entities in the pairing are more likely to be truly related to each other. Accordingly, z may be defined as the position of the occurrence of the further entity (e.g. the position of the first character of the occurrence in number of characters from the start of the source text) minus the position of the occurrence of the first entity (defined in the same way).

In some embodiments, the second filtering stage comprises, for each candidate entity pairing in the shortlist of candidate entity pairings: selecting a portion of the source text based on the position in the source text of one or both of the occurrences in the candidate entity pairing; and determining one or more semantic characteristics and/or one or more structural characteristics of the selected portion of the source text. Filtering the shortlist of candidate entity pairings based on one or more semantic characteristics and/or one or more structural characteristics associated with at least a portion of the source text may comprise filtering the shortlist based on the characteristic(s) determined for each candidate entity pairing.

Accordingly, a portion of the source text which is in some way related to the occurrences in the candidate entity pairing may be selected and one or more semantic characteristics and/or one or more structural characteristics of that selected portion of text may be determined. The filtering may then be carried out based on those determined characteristic(s).

In some embodiments, selecting a portion of the source text based on the position in the source text of one or both of the occurrences in the candidate entity pairing comprises selecting at least a portion of (and optionally all of) the source text which is between the two occurrences in the candidate entity pairing. The text which is between the two occurrences of an entity pairing in the source text will be referred to herein as the context string for that entity pairing.

In some embodiments, the first entity is in a first class of entity and the further entity (in a given entity pairing) is in a different class of entity. A class of entity may be an entity type or entity category. A class of entity may be defined in any suitable way. For example, a class of entity may comprises or consist of entities having a particular characteristic, particular associated metadata or particular values of metadata fields. As mentioned above, examples of classes in the field of cybersecurity are: threat actor; malware, and cyber-attack technique. Examples of classes in the field of medicine include: enzyme, organ. Examples of classes in finance are: bank, building society, individual, company.

In some embodiments, the source text is at least a portion of a cybersecurity threat report. Accordingly, relationships may be identified between cybersecurity entities and this information provided to an analyst, for example. In some embodiments, the source text may comprise data indicative of a cyberattack (e.g. that has already been carried out or that is anticipated) on a computer system or network of computers.

In some embodiments, the first entity and/or the further entity may be selected from the following: a threat actor; a type of malware, and a cyber-attack technique.

As mentioned above, the first entity may be in a first class of entity and the further entity may be in a different class of entity. Accordingly, in the case of a cybersecurity application of the present invention, an entity pairing may be made up of any of the following:
a threat actor and a type of malware;
a threat actor and a cyber-attack technique; and
a type of malware and a cyber-attack technique.
In some embodiments, the method comprises identifying candidate entity pairings which include one of these three combinations only.

In some embodiments, determining one or more structural characteristics of the selected portion of the source text comprises determining a number of text separators in the source text between the two occurrences in the respective candidate entity pairing. For example, this may be a number of text separators after the last character of the first occurrence (i.e. the occurrence that appears first in the source text) and before the first character of the second occurrence (i.e. the occurrence that appears second in the source text). Examples of text separators include punctuation marks, spaces, new paragraphs, full stops and any of the following: '|' , ',' , '∥', '#', ':', ';'.

In some embodiments, the method comprises building a knowledge graph based on the final list of one or more related entity pairings. Building a knowledge graph may comprise building a knowledge graph from scratch or adding to or updating an existing knowledge graph.

A knowledge graph, also known as a semantic network, represents a network of entities- e.g. objects, events, situations, or concepts-and illustrates the relationship between them. This information may be stored in a graph database and visualized as a graph structure, prompting the term knowledge 'graph'. A knowledge graph is typically made up of two main components: nodes and edges. The nodes are each representative of an entity and each edge connects two nodes, representing a relationship between those nodes. Each node may have a unique name and a class. The node class may be one of a predefined set of classes and any given node may need to belong to one of those classes. As above, an example of a set of classes in the field of cybersecurity is: malware, threat actor and technique. The knowledge graph may be undirected (i.e. an edge between two nodes signifies a connection going both ways) or directed. One or more edges between nodes may have a weight associated with it, indicating for example a strength or even a likelihood of a relationship. Equally, the edges may not have weights associated with them and the edges may simply indicate the presence of a relationship or connection between the respective two nodes.

Building or adding to a knowledge graph may comprise one or both of:
- adding one or more nodes corresponding to one or more respective entities included in an entity pairing in the final list of entity pairings;
- adding one or more edges between nodes corresponding to entities within an entity pairing in the final list of entity pairings.

By building or adding to a knowledge graph using the final list of entity pairings, information relating to relationships between entities may be provided to a user, for example a security analyst, in a more digestible format. This may enable more efficient processing of the data or actions being taken as a result of the data being presented to the user faster, more efficiently and/or with better results (e.g. threat mitigation).

Further advantages of the building a knowledge graph using the method disclosed herein arise as a result of more accurate relationships being identified, as follows:
- fewer relationships are identified and represented in the knowledge graph in the form of fewer edges and so less memory is required to store that knowledge graph;
- a smaller knowledge graph is faster to load than a larger, more cumbersome graph;
- maintenance of the (smaller, more accurate) knowledge graph requires less computational effort and resources;
- the smaller, more accurate knowledge graph is faster to build than a larger graph.

In some embodiments, the method comprises determining one or more actions based on the final list of related entity pairings. In some embodiments, the method comprises determining one or more cyber-threat mitigation steps based on the final list of entity pairings. In some embodiments, the method may comprises determining one or more cyber-threat mitigation steps based on the knowledge graph.

In some embodiments, the method comprises displaying the knowledge graph, receiving user input and determining one or more actions, for example one or more threat mitigation steps, based on the user input.

In some embodiments, the second filtering stage may comprise determining, for each candidate entity pairing in the shortlist, one or more structural characteristics of at least a portion of the source text (e.g. the context string). Determining the one or more structural characteristics may comprise:
- determining a number of new sentences and/or new paragraphs in the source text between the occurrences of the respective candidate entity pairing and determining the value of a separation parameter based on the number of new sentences and/or paragraphs; and/or
- determining a number of text separators and/or a number of occurrences of entities of the same class in the source text between the occurrences of the respective candidate entity pairing and determining the value of a listing-sentence parameter based on the determined number(s);
The method may further comprise filtering the shortlist of candidate entity pairings based on the determined values. In other words, the second filtering stage may comprise determining, for each candidate entity pairing in the shortlist, the value of a separation parameter and/or the value of a listing-sentence parameter (both as defined above). The filtering may then be carried out based on the determined value(s).

In some embodiments, the second filtering stage may comprise determining, for each candidate entity pairing in the shortlist, the value of a direction-of-travel parameter which depends on the order in which the occurrences in the respective candidate entity pairing appear in the source text and filtering the shortlist of candidate entity pairings based on the determined values. The direction-of-travel parameter, DT, may be a function of the distance between the two occurrences, z. The direction-of-travel parameter, DT, may be defined by a sigmoid function, for example.

In some embodiments, the second filtering stage may comprise determining, for each candidate entity pairing in the shortlist, one or more semantic characteristics, wherein determining the one or more semantic characteristics may comprise:
- obtaining a vector embedding of at least a portion of the source text;
- obtaining a vector embedding of a pre-determined list of connecting words;
- determining a measure of similarity between the two obtained vector embeddings; and
- determining the value of a semantic-encoding parameter based on the determined measure of similarity;
The method may further comprise filtering the shortlist of candidate entity pairings based on the determined values.

In some embodiments, the second filtering stage may comprise determining, for each candidate entity pairing in the shortlist, the respective values of two or more (i.e. any two or three or all four) of the following:
- a listing sentence parameter, wherein determining the value of the listing sentence parameter comprises determining a number of text separators and/or a number of occurrences of entities of the same class in the source text between the occurrences of the respective candidate entity pairing and determining the value of the listing sentence parameter based on the determined number(s);
- a direction-of-travel parameter which depends on the order in which the occurrences in the respective candidate entity pairing appear in the source text;
- a semantic-encoding parameter, wherein determining the value of the semantic-encoding parameter comprises obtaining a vector embedding of at least a portion of the source text; obtaining a vector embedding of a pre-determined list of connecting words; determining a measure of similarity between the two obtained vector embeddings; and determining the value of the semantic-encoding parameter based on the determined measure of similarity; and
- a separation parameter, wherein determining the value of the separation parameter comprises determining a number of new sentences and/or new paragraphs in the source text between the occurrences of the respective candidate entity pairing and determining the value of a separation parameter based on the number of new sentences and/or paragraphs;
The method may further comprise filtering the shortlist of candidate entity pairings based on the two or more parameter values determined for each entity pairing.

In some embodiments, determining, for each candidate entity pairing in the shortlist, the respective values of two or more parameters may comprise determining the two or more respective values for each candidate entity pairing in parallel. In other words, for each candidate entity pairing in the shortlist, the processing involved in determining the value of each of the two (or more) parameters is done concurrently. An advantage to determining the two values in parallel is that the overall method is faster than a method in which each part of the method is carried out in sequence.

In some embodiments, the second filtering stage comprises, for each candidate entity pairing in the shortlist combining the determined respective values (of each of the two or more parameters) to obtain a single value, which will be referred to herein as the feature space value. Combining the values to obtain the feature space value may comprise using a weighting for one or more of the values. In other words, the feature space value may be a weighted sum of the values of the two or more parameters for a given candidate entity pairing. The weightings may be predetermined or may be determined dynamically as part of the method. The weightings may be determined by trial and error, for example. In some embodiments, the weightings may be determined using machine learning. Determining the weightings using machine learning may comprise providing a machine learning model with a training data set comprising source texts and known relationships between entities mentioned in those source texts. The model could then be used to determine the optimal weightings for accurately identifying relationships.

The methods disclosed herein may be used to identify relationships between pairs of entities, for example between an entity in a first class and an entity in a second, different class. In this way, relationships between entities of two classes may be identified. The method may be carried out multiple times for multiple different classes to build up relationships between entities in various classes. For example, the method may be carried out a first time to identify relationships between threat actors (an example of a first class) and types of malware (an example of a second class). The method may then be repeated for two further classes, for example to identify relationships between types of malware and cyber-attack techniques. In this way, data relating to cybersecurity may be accumulated and optionally a knowledge graph built.

According to a second aspect there is provided a computer system including a processor and memory storing computer program code for performing the steps of a method as disclosed herein.

In some embodiments, the processor comprises two or more parallel processing modules for processing data in parallel. For example, the two or more parallel processing modules may, for each candidate entity pairing, determine the respective value of two or more parameters, e.g. as described above. The parallel processing units may be or comprise one or more of: processors, integrated circuits, configurable logic blocks or Field Programable Gate Arrays (FPGAs). An FPGA is a reconfigurable semiconductor device comprising a matrix of configurable logic blocks connected via programmable interconnects.

According to a third aspect there is provided a computer program comprising instructions which, when the program is executed by a computer, cause the computer to carry out a method as disclosed herein.

### BRIEF DESCRIPTION OF THE DRAWINGS

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element.
Figure 1 schematically illustrates a method of extracting information from a source text and building a knowledge graph based on that data.
Figure 2 schematically illustrates an example of a knowledge graph.
Figure 3 schematically illustrates a method of identifying relationships between entities.
Figure 4 schematically illustrates a list of occurrences of an entity in a source text.
Figure 5 schematically illustrates a list of candidate entity pairings.
Figure 6 schematically illustrates a shortlist of candidate entity pairings.
Figures 7A and 7B schematically illustrate a method of identifying relationships between entities and building a knowledge graph based on those relationships.
Figure 8 schematically illustrates a list of entities extracted from a source text.
Figure 9 schematically illustrates part of the method shown in Figure 7B.
Figure 10 schematically illustrates an example data processing system.
Figure 11 schematically illustrates an example processor.
Figure 12 illustrates a sigmoid function.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

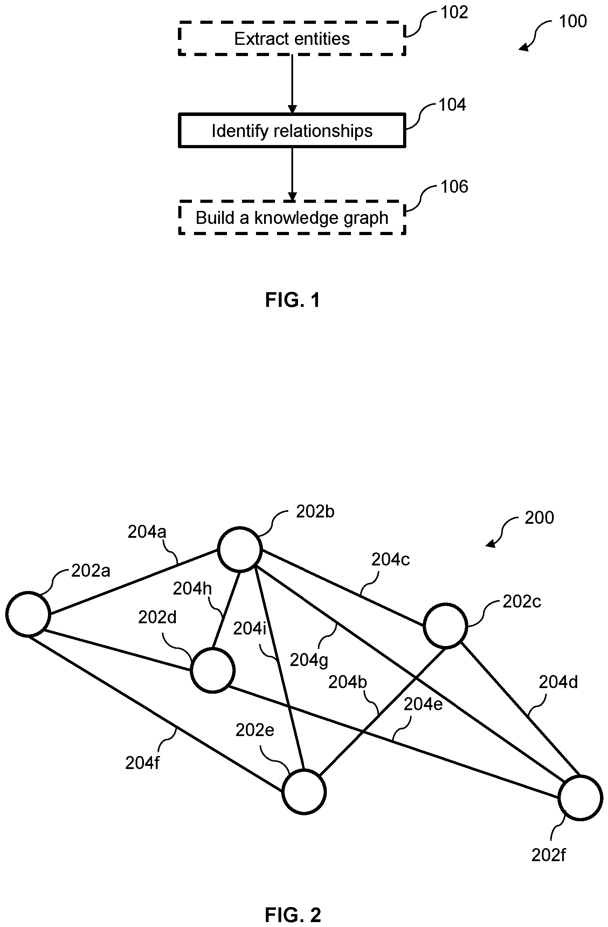

Figure 1 illustrates an overall process 100 for extracting information from a source text and building a knowledge graph based on the extracted information. The present application focusses on one part of this process but the overall process is described in order to provide context.

With reference to Figure 1, in a first optional step 102, one or more entities are extracted from a source text. Examples of types of entities include objects, events, situations, concepts, individuals, groups, companies, organisations, activities, software modules, software types, assets, medical conditions, diseases and bank accounts. The source text may be any text, whether structured or unstructured, and may relate to any topic. Examples of source text include cybersecurity threat reports, medical journals, finance reports, webpages and software code.

The entities may be extracted from the source text by any suitable method. An example of such a method is named entity recognition (NER), for example as disclosed in patent application PCT/EP2025/052889.

In embodiments where step 102 is omitted from the method, data relating to the various entities may simply be received or retrieved, e.g. from a memory.

In step 104, one or more relationships are identified between the entities. In other words, pairs of entities are identified as being related. Additional detail on this step will be provided below.

In an optional step 106, a knowledge graph is built (which may include adding to or updating an existing knowledge graph or building a knowledge graph from scratch). The knowledge graph is built based on the entities in the identified related pairs (represented by nodes) and the pairings identified as containing related entities (represented by edges). Step 106 may be omitted from the method. Instead, the relationships identified at step 104 may be output, e.g. displayed, in another format. For example, data indicating the identifying related pairings may be stored for processing at a later date or may be otherwise analysed or processed.

Figure 2 shows an example of a knowledge graph 200. The knowledge graph 200 comprises nodes 202a-f which each represent an entity. Each node has associated with it a unique identifier and metadata relating to the entity. The graph 200 also comprises edges 204a-i, which each connect a respective pair of nodes. The edges 204a-i are unweighted and undirected but in other embodiments one or more of the edges may have a weight and/or a direction. A direction of an edge may indicate some characteristic of the relationship, for example a direction of the transfer of information or physical matter, e.g. the transfer of enzymes from one organ (represented by a first node) to a second organ (represented by a second node).

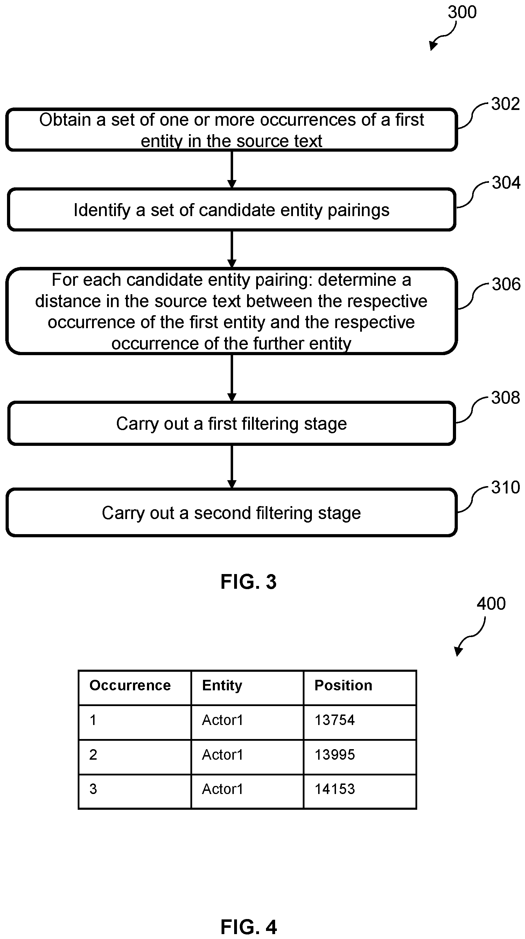

A method 300 of identifying relationships between entities mentioned in a source text is illustrated in Figure 3. This method corresponds to step 104 in the method illustrated in Figure 1.

At step 302, a set of one or more occurrences of a first entity in a source text is obtained. In this example, the first entity is a threat actor 'Actor1'. Each occurrence (which may otherwise be referred to as an instance or a mention) of 'Actor1' in the source text, which is a cybersecurity threat report, is identified along with the position in the source text of that occurrence. The position of an occurrence is defined as the position of the first character of the occurrence, with respect to the first character of the source text. An example of the set 400 of occurrences of 'Actor 1' obtained as a result of step 302 is shown in Figure 4.

At step 304, a set of candidate entity pairings is identified. This step includes: for each occurrence of the entity 'Actor1' in the set, identifying in the source text one or more occurrences of a further entity (i.e. not 'Actor1'), which are nearest to the respective occurrence of 'Actor1' in the source text; and identifying a candidate entity pairing as comprising the respective occurrence of 'Actor1' and an identified occurrence of a further entity.

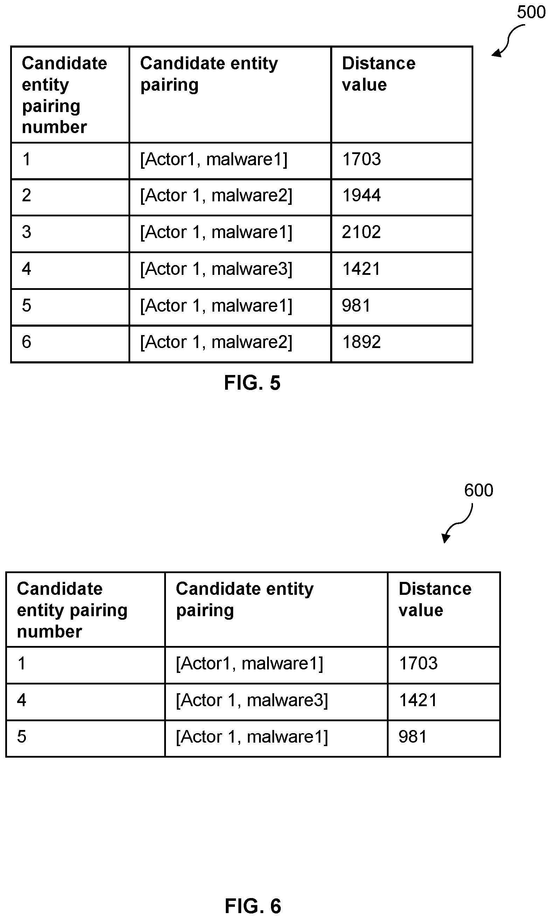

As part of step 304, for each occurrence of 'Actor 1' the two nearest occurrences of a different entity (i.e. an entity other than 'Actor1') are identified: the occurrence which is closest in a forwards direction (moving through the text in the normal reading direction) and the occurrence which is closest in the backwards direction (opposite to the forwards direction). The occurrence of 'Actor1' and each identified nearest occurrence of a different entity are grouped into a respective candidate entity pairing. Accordingly, for each occurrence of 'Actor1', two candidate entity pairings are obtained: the first candidate entity pairing comprising the occurrence of 'Actor 1' and the nearest occurrence of a different entity in a forwards direction and the second candidate entity pairing comprising the occurrence of 'Actor 1' and the nearest occurrence of a different entity in a backwards direction. The set 500 of candidate entity pairings obtained as a result of step 304 is shown in Figure 5. Pairings 1 and 2 each contain the first occurrence of 'Actor1', pairings 3 and 4 each contain the second occurrence of 'Actor1' and pairings 5 and 6 each contain the third occurrence of 'Actor1'.

At step 306, for each candidate entity pairing a distance in the source text between the two occurrences within the candidate entity pairing is also determined. Accordingly, each candidate entity pairing has an associated distance value as illustrated in Figure 5.

At step 308, a first filtering stage is carried out to obtain a shortlist of candidate entity pairings. This involves applying a threshold to the distance value associated with each candidate entity pairing. The threshold is a predetermined distance value but in other embodiments the threshold be determined as part of the method and may depend on one or more characteristics of the source text, for example the length of the threat report. The shortlist 600 of candidate entity pairings is shown in Figure 6.

Referring back to Figure 3, at step 310, a second filtering stage is carried out on the shortlist of candidate entity pairings to obtain a final list of entity pairings. The filtering is based on a semantic characteristic and a structural characteristic of at least a portion of the source text. It will be appreciated that in other examples, only (one or more) semantic characteristics are taken into account. In other example, only (one or more) structural characteristics are taken into account.

In this example, the portion of the source text is the text between the two occurrences in each candidate entity pairing (the 'context string'). For each candidate entity pairing in the shortlist, the text between the two occurrences in the pairing is extracted from the source text and the semantic characteristic and the structural characteristic of that portion of text are each determined.

The semantic characteristic identified at step 310 is the value of a semantic-encoding parameter, SE. Determining the value involves a number of sub-steps as follows. First, a vector embedding of the context string ('WB') is obtained. A vector embedding of a predefined string comprising common connecting words (this string being referred to herein as the connecting words string and the vector embedding being referred to as 'CW') is obtained. Any suitable vector embedding method (as will be known by a person skilled in the art) may be used for each of the connecting words embedding and the context string embedding. Then, a measure of similarity between the obtained context string vector embedding and the connecting words sting vector embedding is obtained. The measure of similarity is the cross entropy of the two vector embeddings. The cross entropy, CE, is defined as: $CE \left(CW, WB\right) = - {\sum }_{j} {\sum }_{i} C {W}_{i} log W {B}_{j}$

Second, the position of a connecting word occurrence within the context string is encoded. To do this, for each word in the context string, the cross entropy between the vector embedding of that word and the vector embedding of the connecting words string is calculated. The word in the context string having the lowest cross entropy value is identified. A position parameter, pos, of this identified word is calculated as: $pos \left(word\right) = \frac{No . of words in the context string occurring before the identified connecting word}{Number of words in the context string}$ The semantic-encoding parameter, SE, is then calculated as: $SE = CE \left(CW, WB\right) \times pos \left(word\right)$

The structural characteristic identified at step 310 is a value of a separation parameter, S. A number of new sentences and a number of new paragraphs in the context string is determined and the value of the separation parameter is determined based on the determined number of new sentences and the determined number of new paragraphs. The separation parameter, S, is defined as follows, where x is the number of new sentences and y is the number of new paragraphs: $S \left(x, y\right) = {e}^{- \left(2x+y\right)}$ The value of this negative exponential function value decreases with increase in x and y. Therefore, as the number of new paragraphs and sentences between any two occurrences increases, the value of the separation parameter decreases.

For each candidate entity pairing in the shortlist, the value of the two parameters, SE and S, are summed to obtain a total value. A threshold is applied to the total value determined for each candidate entity pairing. Entity pairings having a total value below the threshold are added to the final list of entity pairings. Entity pairings having a total value above the threshold are discarded.

The final list of entity pairings contains those pairings of entities which are deemed to be related (to each other) in some way. In other words, for each entity pairing in the final list, the entities within each pairing are related to each other. For example, in the case of actors and malware, the relationship may be that the actor uses that malware or created that malware.

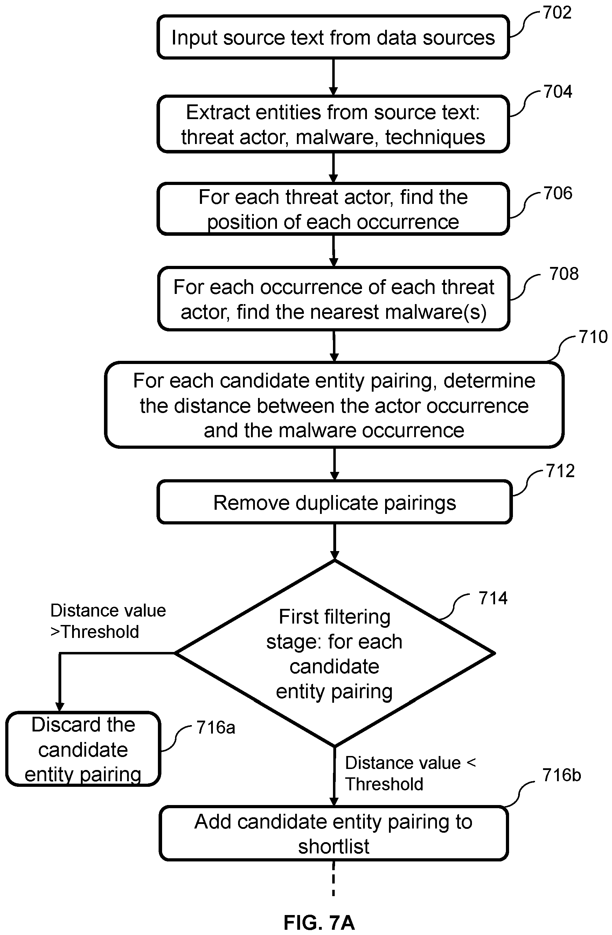

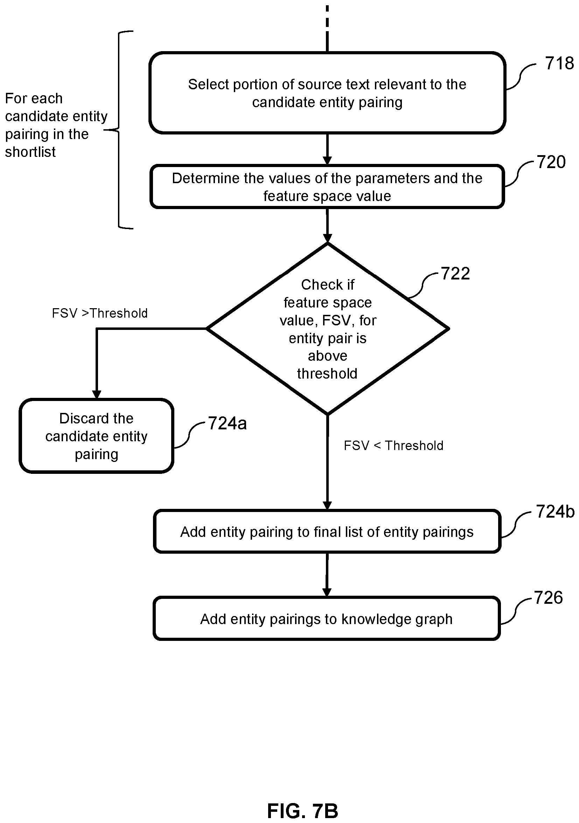

A further method 700 of identifying relationships between entities mentioned in a source text is illustrated in Figure 7A and 7B. Figure 7A shows the first half of the method and Figure 7B shows the second half, which follows on directly from the first half as shown by the dashed lines at the bottom of Figure 7A and the top of Figure 7B respectively. The method 700 includes the same general steps of method 300 along with additional steps and more detail.

Referring first to Figure 7A, at step 702 data in the form of source text is obtained from one or more data sources. The source text may be received, e.g. over a network, or obtained from a source such as a library or downloaded from a server e.g. over the internet.

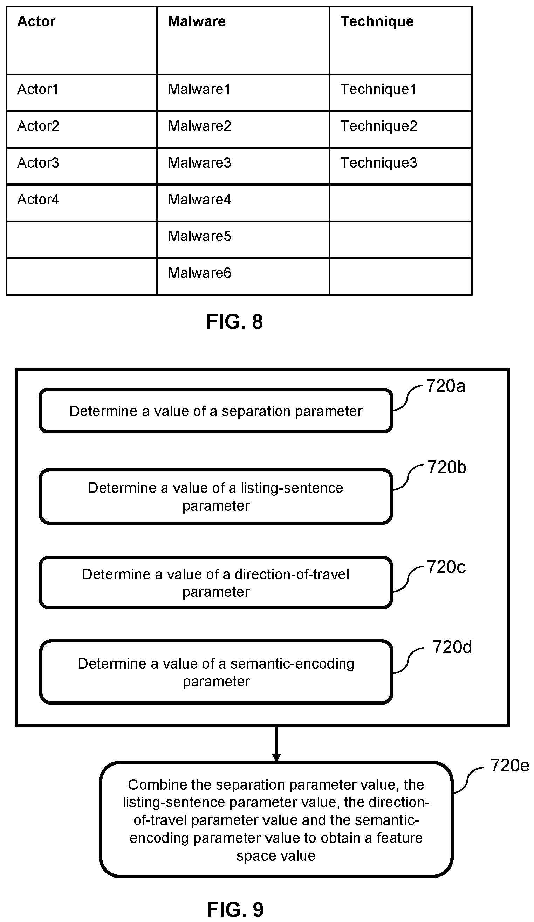

At step 704, entities are extracted from the source text. In this example, the entities belong to three classes are extracted, with a view to identifying relationships between those three entities. The three classes are: threat actor, malware and techniques. The entities are extracted from the source text using named entity recognition (NER). An example of NER is disclosed in patent application PCT/EP2025/052889. The result is a list of entities mentioned in the source text, each entity belonging to one of the three classes. An example of a data set resulting from step 704 is shown in Figure 8, with the names of each entity listed in the columns.

The goal is to identify relationships between all three classes, i.e. relationships between actors and malware, relationships between actors and techniques and relationships between malware and techniques. Accordingly, entities of all classes are extracted at step 704. The following steps, steps 706-724, are carried out for two of the classes at a time. The following description will relate to carrying out steps 706 and 724 in order to identify relationships between actors and malwares, but it will be appreciated that steps 706 to 724 may be repeated for different combinations of classes (e.g. malware and techniques, actors and techniques) in order to build up a view of relationships between any number of classes.

At step 706, a list of all occurrences of each actor identified in the source text is obtained. For example, Actor1 may be mentioned three times in the source text. Accordingly, there are three occurrences of Actor1 in the text and for each occurrence, the position of that occurrence is obtained. An example of such a list for Actor1 is shown in Figure 4. Step 706 involves identifying all occurrences of all of the actors and so the full list will obtain data such as that shown in Figure 4 for each of Actor1-Actor4. The position of the occurrence is defined as the position of the first character of the occurrence with respect to the first character of the source text. However, the position of an occurrence may alternatively be defined in a different way (e.g. the position of the occurrence word itself with respect to the first word of the source text).

At step 708, for each occurrence of each actor, the nearest two occurrences of a malware are identified. This includes identifying the nearest occurrence of a malware to the respective actor occurrence in a forwards (normal reading) direction and the nearest occurrence of a malware to the respective actor occurrence in a backwards direction. Accordingly, for each occurrence of each actor, two candidate identify pairings are identified. For occurrence1 of Actor1, this would be as follows:
[Occurrence 1 of Actor1, nearest malware in forwards direction]
[Occurrence 1 of Actor1, nearest malware in backwards direction].

At step 710, for each candidate entity pairing identified at step 708, a distance between the occurrences which make up the entity pairing is determined. This distance is the difference between the position of the first character of the occurrence of the actor and the position of the first character of the occurrence of the malware. As a result, the distance value will be positive for pairings in which the malware appears after the actor in the source text and negative if the malware appears before the actor in the source text. In this way, the distance value has a direction (positive or negative) as well as a modulus. The inventors have recognised that the ordering of the actor and malware is relevant to the likelihood of the source text indicating that a relationship exists between the actor and malware.

The distance may alternatively be determined using some other definition of distance, i.e. rather than using the positions of the first characters. For example, the position of the word relative to the first word of the source text may be used instead.

At step 712, any duplicate entity pairings are discarded. Here, the term duplicate refers to multiple entity pairings that contain the same two entities. The multiple entity pairings will contain different occurrences of the entities but nevertheless include the same entities (i.e. entity names). Where multiple candidate entity pairings exist which contain the same two entities, the pairing having the lowest distance value associated with it, i.e. the distance value having the smallest modulus, is selected and the remaining pairings containing those same two entities are discarded. The result after step 712 is a list of unique entity pairings (referred to herein as candidate entity pairings), each with an associated distance value.

At step 714, a first filtering stage is carried out. In this first filtering stage, a threshold is applied to the distance values of the candidate entity pairings identified at step 712. Specifically, any candidate entity pairings having an associated distance value higher than a predetermined threshold are discarded (see step 716a). The rest of the pairings are retained and are added to a shortlist of entity pairings (see step 716b). The threshold may have been determined empirically, for example. The threshold may depend on the length of the source text, for example, with a longer report having a higher threshold.

Referring now to Figure 7B, steps 718 and 720 are carried out for each candidate entity pairing in the shortlist. At step 718 a portion of the source text is selected for further analysis. The portion is the text (of the source text) which is between the two occurrences of the entity pairing, i.e. the context string.

At step 720, the value of each of four parameters for the respective candidate entity pairing are determined. This involves four sub-steps 720a-b which are illustrated in Figure 9 and are now described in turn. The four sub-steps are carried out in parallel. It will be appreciated that in other embodiments, a different number of parameters may be used (e.g. 1, 2 or 3) and the values of those parameters used to filter the shortlist of candidate entity pairings

Referring to figure 9, at step 720a a value of a separation parameter is determined. A number of new sentences and a number of new paragraphs in the context string is determined and the value of the separation parameter is determined based on the determined number of new sentences and the determined number of new paragraphs. The separation parameter, S, is defined as follows, where x is the number of new sentences and y is the number of new paragraphs: $S \left(x, y\right) = {e}^{- \left(2x+y\right)}$ The value of this negative exponential function value decreases with increase in x and y. Therefore, as the number of new paragraphs and sentences between any two occurrences increases, the value of the separation parameter decreases. Therefore, as will be explained below with respect to the feature space value, there is less likelihood of those two entities being found to be related to one another.

In other embodiments, the separation parameter may be defined in another way. For example, the separation parameter may simply be proportional to the number of new sentences, the number of new paragraphs or the total number of new sentences and paragraphs.

In the source text, a full stop '.' is taken to indicate a new sentence. In other embodiments another text separator or a new line, for example, may be taken to indicate a new sentence instead.

Two new lines is taken to indicate a new paragraph. In other embodiments, only one new line, some other text separator or a new bullet point may be taken to indicate a new paragraph.

At step 720b, the value of a listing sentence parameter is determined. First, the number of occurrences of entities of each class of entity in the context string is determined. In other words, each of the following is determined: the number of occurrences of actor entities in the context string, the number of occurrences of malware entities in the context string, and the number of occurrences of technique entities in the context string. These three values are summed, the total being designated hereafter as H. Additionally, a number of text separators in the context string is determined. The number of text separators will be designated hereafter as S. Text separators include punctuation marks, spaces, new paragraphs, full stops and any of the following: '1' , ',' , '∥', '#', ':', ';'. It will be appreciated that any other text separator may be used additionally or alternatively.

The value of the listing-sentence parameter, LS, is determined based on the sum of the H and S and with reference to a pre-determined threshold, as follows: $LS = \left\{\begin{matrix}0 , & Sum < Threshold \\ 1 , & Sum \geq Threshold\end{matrix}\right.$ The predetermined threshold may have been determined empirically, for example. In this example, the threshold value is set at 5 but in other examples it may be higher or lower.

In other embodiments, the listing-sentence parameter may be defined in a different way. The listing sentence parameter may be proportional to one of H and S, for example.

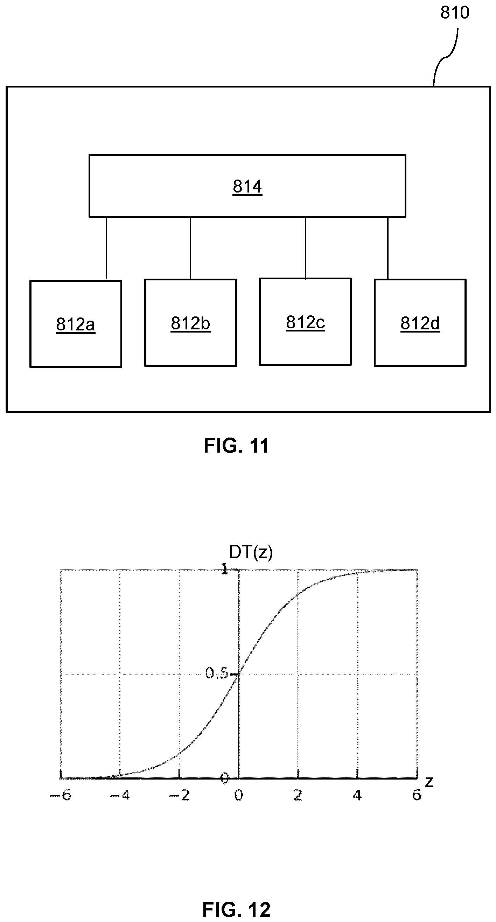

At step 720c, the value of a direction-of-travel parameter, DT, is determined. The value of the parameter depends on whether the occurrence of the actor entity occurs before or after the occurrence of the other entity in the entity pairing in the source text. First, a distance value, z, is determined. z has both a value and a positive or negative sign. The definition of z may depend on the class of the first entity and the class of the further entity. The inventors have recognised that the ordering of the classes in the entity pairing is relevant to the likelihood of those entities being related. For example, that if the first entity is a threat actor, if the occurrence of a further entity of a different class (such as malware or technique) occurs before the occurrence of a threat actor in the source text, it is unlikely that that particular pairing are truly related. Conversely, if the malware/technique is mentioned in the source text after the threat actor, the pairing is more likely to be truly related. Accordingly, z is defined as the position of the occurrence of the further entity (e.g. the position of the first character of the occurrence in number of characters from the start of the source text) minus the position of the occurrence of the first entity (defined in the same way). DT is defined by a sigmoid function, as follows: $DT \left(z\right) = \frac{1}{1 + {e}^{- z}}$ The general shape of a sigmoid function such as that defined by the equation above is shown in Figure 12. It can be seen that for positive values of z, DT(z) has a higher value than for negative values of z. As will be explained below, the relatively low values of DT(z) for negative values of z contributes to a finding that the entity pairing is a true entity pairing (i.e. that the entities in that pairing are related).

At step 720d, the value of a semantic-encoding parameter, SE, is determined. This involves a number of sub-steps as follows. First, a vector embedding of the context string ('WB') is obtained. A vector embedding of a predefined string comprising common connecting words (this string being referred to herein as the connecting words string and the vector embedding being referred to as 'CW') is obtained. Any suitable vector embedding method (as will be known by a person skilled in the art) may be used for each of the connecting words embedding and the context string embedding. Then, a measure of similarity between the obtained context string vector embedding and the connecting words sting vector embedding is obtained. The measure of similarity is the cross entropy of the two vector embeddings. The cross entropy, CE, is defined as: $CE \left(CW, WB\right) = - {\sum }_{j} {\sum }_{i} C {W}_{i} log W {B}_{j}$

Second, the position of a connecting word occurrence within the context string is encoded. To do this, for each word in the context string, the cross entropy between the vector embedding of that word and the vector embedding of the connecting words string is calculated. The word in the context string having the lowest cross entropy value is identified. A position parameter, pos, of this identified word is calculated as: $pos \left(word\right) = \frac{Number of words in the context string occurring before the identified connecting word}{Number of words in the context string}$ The semantic-encoding parameter, SE, is then calculated as: $SE = CE \left(CW, WB\right) \times pos \left(word\right)$

At step 720e, a feature space value ('FSV') is obtained by combining the values determined in steps 720a-d, specifically:
- the separation parameter value,
- the listing-sentence parameter value,
- the direction-of-travel parameter value, and
- the semantic-encoding parameter value.
The FSV is a weighted sum of the four values. The weight for each value is pre-determined. Examples of how such weights may be determined are provided above. The FSV is calculated as: $Feature Space Value = {w}_{1} S \left(x, y\right) + {w}_{2} LS + {w}_{3} DT \left(z\right) + {w}_{4} SE$ where w₁, w₂, w₃, and w₄ are the respective weights.

As mentioned above, in some embodiments fewer than all four of the parameter values may be used to calculate the FSV. For example, only one, only two or only three values (in any combination) may be summed (optionally using weightings) to obtain the FSV.

Referring back to Figure 7B, at step 722 a threshold is applied to the FSV for each entity pairing in the shortlist. In particular, if the FSV for a particular entity pairing is above the threshold, the entity pairing is discarded (step 724a), If the FSV is below the threshold, the entity pairing is added to a final list of entity pairings (step 724b).

At step 726, the entity pairings in the final list of entity pairings are added to a knowledge graph. Specifically, an edge between two nodes is added which corresponds to a relationship between the entities represented by those two nodes. Adding the pairing to the knowledge graph may comprise adding one or more nodes to the knowledge graph corresponding to one or both of the entities in the pairing.

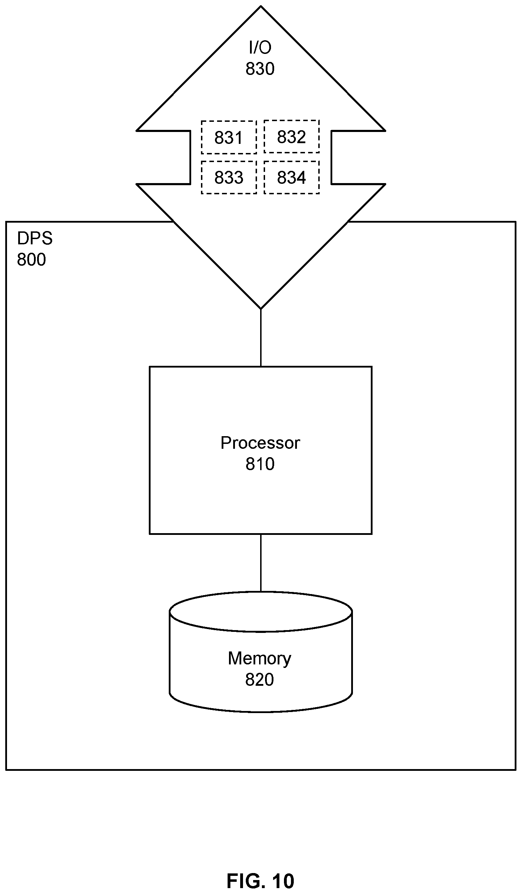

Figure 10 schematically illustrates an example data processing system (DPS) 800 capable of performing any of the methods described above. It comprises a processor 810 operably coupled to both a memory 820 and an interface (I/O) 830.

The memory 820 can optionally comprise computer program instructions which, when the program is executed by the processor 810, cause the data processing system 800 to carry out any of the methods described herein. Alternatively or additionally, the interface 830 can optionally comprise one or both of a physical interface 831 configured to receive a data carrier having such instructions stored thereon and a receiver 832 configured to receive a data carrier signal carrying such instructions.

The receiver 832, when present, can be configured to receive messages. It can comprise one or more wireless receiver modules and/or one or more wired receiver modules. The interface 830 can optionally comprise a transmitter 833 configured to transmit messages. The transmitter 833, when present, can comprise one or more wireless transmitter modules and/or one or more wired transmitter modules.

The interface 830 can optionally comprise one or more user interface devices 834. One or more of the user interface devices may be configured to display a knowledge graph output (or updated or otherwise modified) by any of the methods described herein. Such a knowledge graph may be in a format as illustrated in Figure 2.

With reference to Figure 11, the processor 810 comprises four parallel processing modules 812a-d. Each parallel processing module is connected to a CPU 814. The modules 812a-d are shown schematically in Figure 10 but are each implemented respectively as one or more configurable logic blocks of a field-programmable gate array (FPGA). A FPGA is a reconfigurable semiconductor device comprising a matrix of configurable logic blocks (CLBs) connected via programmable interconnects. Unlike software-based implementations, hardware-based security (e.g. on FPGAs) can be more resistant to certain types of attacks, such as side-channel attacks. This is because the physical separation of components can reduce the risk of information leakage. FPGAs can establish a hardware root-of-trust, ensuring that the system starts in a known good state and remains secure throughout its operation. This is advantageous in preventing unauthorized modifications.

An advantage of using parallel processing modules is that each of the four values which are calculated and combined to obtain the FSV can be calculated in parallel. These four values are the values of the following parameters:
- the separation parameter value,
- the listing-sentence parameter value,
- the direction-of-travel parameter value, and
- the semantic-encoding parameter value.

The FSV calculation is such that parallel processing may be used. Specifically, each of the four parameters is independent of the other three parameters and so the four parameter values can be calculated in parallel. The value of each parameter is then output to the CPU 814 and the CPU combines the four values as described above to obtain the FSV. The CPU 814 also carries out the steps of the method preceding the FSV calculation, e.g. steps 710-718 described with reference to Figures 7A and 7B.

In other embodiments, different parallel processing architectures and hardware may be used. For example, the parallel processing modules may instead be any of the following, including any combination of the following:
- GPU (Graphics Processing Unit): Originally designed for rendering graphics, GPUs can be used for parallel processing tasks such as machine learning, scientific simulations, and data analysis due to their ability to handle thousands of simultaneous operations.
- ASIC (Application-Specific Integrated Circuit): custom-designed chips optimized for a specific task. They offer high performance and efficiency for certain tasks like cryptocurrency mining and specific Al applications.
- TPU (Tensor Processing Unit): specialised ASICs for accelerating machine learning workloads.
- NPU (Neural Processing Unit): specialised microprocessors designed to accelerate neural network computations.
- DSP (Digital Signal Processor): specialised microprocessors used for processing signals in real-time.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description, it will be evident to a person skilled in the art that various modifications may be made within the scope of the invention.

The preceding description is presented to enable any person skilled in the art to make and use the system and/or perform the method of the invention and is provided in the context of a particular application. Various modifications to the disclosed examples will be readily apparent to those skilled in the art. It is intended that the specification be considered as exemplary only.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

Reference is made herein to identifying pairs of related entities. This may include determining a likelihood of candidate entity pairings being related and then selecting those pairs of entities which have an associated likelihood of being related above a threshold value.

Reference is also made herein to determining whether two entities are related. This may include determining a likelihood of a pair of entities being related and determining that those entities are related if the likelihood is above a threshold value.

Also disclosed is the following:
1. A method of determining whether a first entity and a second entity mentioned in a source text are related to one another, the source text comprising an occurrence of the first entity and an occurrence of the second entity, the method comprising:
   obtaining at least a portion of the source text;
   determining a number of new sentences and/or a number of new paragraphs in the at least a portion of the source text;
   determining the value of a separation parameter based on the determined number of new sentences and/or the determined number of new paragraphs, wherein the value of the separation parameter is indicative of whether or not the first and second entities are related to one another.
2. A method according to item 1 comprising:
   determining a number of new sentences and a number of new paragraphs in the at least a portion of the source text; and
   determining the value of the separation parameter based on the determined number of new sentences and the determined number of new paragraphs.
3. A method according to item 1 or item 2, wherein the value of the separation parameter is defined by an exponential function.
4. A method according to item 3, wherein the separation parameter, S, is defined by the equation: $S \left(x, y\right) = {e}^{- \left(2x+y\right)}$ wherein x is the number of new sentences and y is the number of new paragraphs.
5. A method according to any preceding item, wherein the at least a portion of the source text is the portion of the source text between (a) whichever of the occurrence of the first entity and the occurrence of the second entity appears first in the source text and (b) the other of the occurrence of the first entity and the occurrence of the second entity.
6. A method of determining whether a first entity and a second entity mentioned in a source text are related to one another, the source text comprising an occurrence of the first entity and an occurrence of the second entity, the method comprising:
   obtaining at least a portion of the source text;
   determining a number of text separators and/or a number of occurrences of entities of the same class in the at least a portion of the source text;
   determining the value of a listing-sentence parameter based on the determined number of text separators and/or the determined number of occurrences of entities of the same class, wherein the value of the listing-sentence parameter is indicative of whether or not the first and second entities are related to one another.
7. A method according to item 6 comprising:
   determining a number of text separators and a number of occurrences of entities of the same class in the at least a portion of the source text; and
   determining the value of the listing-sentence parameter based on the determined number of text separators and the determined number of occurrences of entities of the same class.
8. A method according to item 6 or item 7, wherein the value of the listing-sentence is selected from two possible values, wherein the selection depends on the value of the number of new sentences and/or the value of the number of new paragraphs with respect to a threshold value.
9. A method according to item 8, wherein the selection depends on the value of the sum of the number of new sentences and the number of new paragraphs with respect to a threshold value.
10. A method according to any of items 6 to 9, wherein the at least a portion of the source text is the portion of the source text between (a) whichever of the occurrence of the first entity and the occurrence of the second entity appears first in the source text and (b) the other of the occurrence of the first entity and the occurrence of the second entity.
11. A method of determining whether a first entity and a second entity mentioned in a source text are related to one another, the source text comprising an occurrence of the first entity and an occurrence of the second entity, the method comprising:
   obtaining at least a portion of the source text;
   determining a distance, in the source text, between the occurrence of the first entity and the occurrence of the second entity;
   determining the value of a direction-of-travel parameter based on the determined distance, wherein the value of the direction-of-travel parameter is indicative of whether or not the first and second entities are related to one another.
12. A method according to item 11, wherein the value of the direction-of-travel parameter is defined by a sigmoid function.
13. A method according to item 12, wherein the direction-of-travel parameter, DT, is defined by the equation: $DT \left(z\right) = \frac{1}{1 + {e}^{- z}}$ wherein z is a measure of the distance, in the source text, between the occurrence of the first entity and the occurrence of the second entity.
14. A method according to any of items 11 to 13, wherein the at least a portion of the source text is the portion of the source text between (a) whichever of the occurrence of the first entity and the occurrence of the second entity appears first in the source text and (b) the other of the occurrence of the first entity and the occurrence of the second entity.
15. A method of determining whether a first entity and a second entity mentioned in a source text are related to one another, the source text comprising an occurrence of the first entity and an occurrence of the second entity, the method comprising:
   obtaining vector embedding of at least a portion of the source text;
   obtaining a vector embedding of a predetermined string of connecting words;
   determining a measure of the similarity between the two obtained vector embeddings, wherein the measure of similarity is indicative of whether or not the first and second entities are related to one another.
16. A method according to item 15 comprising, for each word in the at least a portion of the source text:
   obtaining a vector embedding of the word;
   determining a measure of the similarity between the vector embedding of the word and the vector embedding of the predetermined string of connecting words; and identifying, based on the determined measures of similarity, a connecting word as being the word in the at least a portion of the source text which is most similar to the predetermined string of connecting words.
17. A method according to item 16, comprising determining a position value which depends on the position of the connecting word within the at least a portion of the source text.
18. A method according to item 17, comprising determining the value of a semantic-encoding parameter based on:
   the determined measure of similarity between the vector embedding of at least a portion of the source text and the vector embedding of the predetermined string of connecting words; and
   the determined position value.
19. A method according to any of items 15 to 18, wherein determining a measure of the similarity between the vector embedding of at least a portion of the source text and the vector embedding of the predetermined string of connecting words comprises determining the cross entropy between the two vector embeddings.
20. A method according to any of items 16 to 18, wherein, for each word in the at least a portion of the source text, determining a measure of the similarity between the vector embedding of the word and the vector embedding of the predetermined string of connecting words comprises determining the cross entropy between the two vector embeddings.
21. A method according to any of items 15 to 20, wherein the at least a portion of the source text is the portion of the source text between (a) whichever of the occurrence of the first entity and the occurrence of the second entity appears first in the source text and (b) the other of the occurrence of the first entity and the occurrence of the second entity.
22. A method of determining whether a first entity and a second entity mentioned in a source text are related to one another, the source text comprising an occurrence of the first entity and an occurrence of the second entity, the method comprising determining the respective values of two or more of the following:
   a listing-sentence parameter, wherein determining the value of the listing sentence parameter comprises determining a number of text separators and/or a number of occurrences of entities of the same class in at least a portion of the source text and determining the value of the listing sentence parameter based on the determined number(s);
   a direction-of-travel parameter which depends on the order in which the occurrences appear in the source text;
   a semantic-encoding parameter, wherein determining the value of the semantic-encoding parameter comprises obtaining a vector embedding of at least a portion of the source text; obtaining a vector embedding of a pre-determined list of connecting words; determining a measure of similarity between the two obtained vector embeddings; and determining the value of the semantic-encoding parameter based on the determined measure of similarity; and
   a separation parameter, wherein determining the value of the separation parameter comprises determining a number of new sentences and/or new paragraphs in at least a portion of the source text and determining the value of a separation parameter based on the number of new sentences and/or paragraphs; and
   determining whether the first entity and the second entity are related to one another based on the determined two or more values.
23. A method according to item 22, comprising determining the respective values of the two or more parameters in parallel.
24. A method according to item 22 or 23, wherein the at least a portion of the source text is the portion of the source text between (a) whichever of the occurrence of the first entity and the occurrence of the second entity appears first in the source text and (b) the other of the occurrence of the first entity and the occurrence of the second entity.

## Claims

1. A computer-implemented method of identifying one or more pairs of related entities in a source text, the method comprising:
obtaining a set of one or more occurrences of a first entity in the source text;
identifying a set of candidate entity pairings, wherein identifying the set of candidate entity pairings comprises:
for each occurrence of the first entity in the set, identifying in the source text one or more occurrences of a further entity, which is different to the first entity, which are nearest to the respective occurrence of the first entity in the source text; and
identifying a candidate entity pairing as comprising the respective occurrence of the first entity and one of the identified one or more occurrences of a further entity;
for each candidate entity pairing, determining a distance in the source text between the respective occurrence of the first entity and the respective occurrence of the further entity so that each candidate entity pairing has an associated distance value;
carrying out a first filtering stage, wherein the first filtering stage comprises filtering the set of candidate entity pairings based on the associated distance values to obtain a shortlist of candidate entity pairings; and
carrying out a second filtering stage, wherein the second filtering stage comprises filtering the shortlist of candidate entity pairings based on one or more semantic characteristics and/or one or more structural characteristics associated with at least a portion of the source text to obtain a final list of one or more pairs of related entities.

2. A method according to claim 1, wherein the second filtering stage comprises, for each candidate entity pairing in the shortlist of candidate entity pairings:
selecting a portion of the source text based on the position in the source text of one or both of the occurrences in the candidate entity pairing; and
determining one or more semantic characteristics and/or one or more structural characteristics of the selected portion of the source text;
wherein filtering the shortlist of candidate entity pairings based on one or more semantic characteristics and/or one or more structural characteristics associated with at least a portion of the source text comprises filtering the shortlist based on the one or more semantic characteristics and/or one or more structural characteristics determined for each candidate entity pairing.

3. A method according to claim 2, wherein selecting a portion of the source text based on the position in the source text of one or both of the occurrences in the candidate entity pairing comprises selecting at least a portion of the source text which is between the two occurrences in the candidate entity pairing.

4. A method according to any preceding claim, wherein the source text is at least a portion of a cybersecurity threat report.

5. A method according to any preceding claim, wherein the first entity is in a first class of entity and the further entity is in a different class of entity.

6. A method according to any preceding claim, wherein the method comprises building a knowledge graph based on the final list of entity pairings.

7. A method according to any preceding claim, wherein the method comprises determining one or more cyber-threat mitigation steps based on the final list of entity pairings.

8. A method according to any preceding claim, wherein the second filtering stage comprises:
determining, for each candidate entity pairing in the shortlist, one or more structural characteristics of at least a portion of the source text, wherein determining the one or more structural characteristics comprises:
determining a number of new sentences and/or new paragraphs in the source text between the occurrences of the respective candidate entity pairing and
determining the value of a separation parameter based on the number of new sentences and/or new paragraphs; and/or
determining a number of text separators and/or a number of occurrences of entities of the same class in the source text between the occurrences of the respective candidate entity pairing and determining the value of a listing
sentence parameter based on the determined number(s);
and
filtering the shortlist of candidate entity pairings based on the determined parameter values.

9. A method according to any preceding claim, wherein the second filtering stage comprises:
determining, for each candidate entity pairing in the shortlist, the value of a direction-of-travel-parameter which depends on the order in which the occurrences in the respective candidate entity pairing appear in the source text; and
filtering the shortlist of candidate entity pairings based on the determined parameter values.

10. A method according to any preceding claim, wherein the second filtering stage comprises:
determining, for each candidate entity pairing in the shortlist, one or more semantic characteristics, wherein determining the one or more semantic characteristics comprises:
obtaining a vector embedding of at least a portion of the source text;
obtaining a vector embedding of a pre-determined list of connecting words;
determining a measure of similarity between the two obtained vector embeddings; and
determining the value of a semantic-encoding parameter based on the determined measure of similarity;
and
filtering the shortlist of candidate entity pairings based on the determined parameter values.

11. A method according to any of claims 1 to 7, wherein the second filtering stage comprises determining, for each candidate entity pairing in the shortlist, the respective values of two or more of the following:
a listing sentence parameter, wherein determining the value of the listing-sentence parameter comprises determining a number of text separators and/or a number of occurrences of entities of the same class in the source text between the occurrences of the respective candidate entity pairing and determining the value of the listing-sentence parameter based on the determined number(s);
a direction-of-travel parameter which depends on the order in which the occurrences in the respective candidate entity pairing appear in the source text;
a semantic-encoding parameter, wherein determining the value of the semantic-encoding parameter comprises:
obtaining a vector embedding of at least a portion of the source text;
obtaining a vector embedding of a pre-determined list of connecting words;
determining a measure of similarity between the two obtained vector embeddings; and
determining the value of the semantic-encoding parameter based on the determined measure of similarity; and
a separation parameter, wherein determining the value of the separation parameter comprises determining a number of new sentences and/or new paragraphs in the source text between the occurrences of the respective candidate entity pairing and determining the value of a separation parameter based on the number of new sentences and/or paragraphs;
and
filtering the shortlist of candidate entity pairings based on the two or more parameter values determined for each entity pairing.

12. A method according to claim 11, wherein determining, for each candidate entity pairing in the shortlist, the respective values of the two or more parameters comprises determining the two values for each candidate entity pairing in parallel.

13. A computer system including a processor and memory storing computer program code for performing the steps of any preceding claim.

14. A computer system according to claim 13 when dependent on claim 12, wherein the processor comprises two or more parallel processing modules for determining the two or more values for each candidate entity pairing in the shortlist in parallel.

15. A computer program comprising instructions which, when the program is executed by a computer, cause the computer to carry out the method of any of claims 1 to 12.
